# EUROPÄISCHE PATENTSCHRIFT

(11) **EP 3 570 656 B1**
(45) Veröffentlichungstag und Bekanntmachung des Hinweises auf die Patenterteilung: **28.09.2022**
(21) Anmeldenummer: 18702906.1
(22) Anmeldetag: 17.01.2018
(51) Int. Cl.: A01F 12/44

(54) **SIEB**
SCREEN
CRIBLE

(30) Priorität: 17.01.2017 DE 202017100215 U
(43) Veröffentlichungstag der Anmeldung: 27.11.2019
(73) Patentinhaber: AB. Agri-Broker e.K., 42699 Solingen (DE)
(72) Erfinder: WOLLESEN, Jörg, 42699 Solingen (DE)
(74) Vertreter: Patentanwälte Vomberg & Schart
(86) Internationale Anmeldenummer: PCT/DE2018/100032
(87) Internationale Veröffentlichungsnummer: WO 2018/133902

(56) Entgegenhaltungen:
- EP-A1- 1 591 003
- EP-A1- 1 782 677
- FR-A1- 2 823 638
- US-A- 6 053 812

## Beschreibung

Die Erfindung betrifft ein Sieb für eine Reinigungsvorrichtung eines Mähdreschers mit einem Rahmen, in dem mehrere gleichartige, sich quer zu einer Längs- und Schwingrichtung des Siebes erstreckende Lamellen - in der Längsrichtung des Siebes betrachtet - hintereinander angeordnet sind und um sich quer zur Längsachse des Siebens erstreckende Drehachsen in jeweils zumindest im Wesentlichen gleichen Abständen drehbar in dem Rahmen gelagert und mit Verstellelementen versehen sind, die eine wählbare Einstellung des Winkels der Lamellen zum Rahmen ermöglichen, wobei jede Lamelle eine im Querschnitt abgewinkelte Form mit einer Knickkante und mit einem unteren, eine linear verlaufende untere Abschlusskante besitzenden, als breitflächig geschlossener effektiver Windfang dienenden Teil und einem in Fortsetzung kommenden Stoß- und Windleitblech oberen Bereich, der eine nichtlineare obere Abschlusskante besitzt, aufweist.

Siebe der genannten Art werden in selbstfahrenden Erntemaschinen, insbesondere Mähdreschern mit einer Drescheinrichtung und einer sich daran anschließenden Abscheideeinrichtung zum Abscheiden der Körner verwendet. Die Abscheideeinrichtung besteht zumeist aus einem Ober- und einem Untersieb, die jeweils von Luft durchströmt werden. Die Verschwenkung der Lamellen dient zur Regulierung des Luftstroms, der durch ein Gebläse erzeugt wird, sowie zur Einstellung der Intensität des Auseinanderschüttelns des Erntegemisches entlang der Längsachse.

Mähdrescher dienen in der Landwirtschaft zum Ernten von Pflanzen, die vom Feld nach dem Schnitt aufgenommen, ausgedroschen und getrennt werden. In der Regel ist nach dem Dreschen und Trennen noch Spreu und Kurzstroh (Nichtkornbestandteile) mit dem ausgedroschenen Korn vermischt. Die Reinigungseinrichtung dient dazu, solche Verunreinigungen aus dem Korn zu entfernen. Die heute eingesetzten Mähdrescher besitzen hierzu ein Gebläse, ein aus einem Obersieb und einem Untersieb bestehendes Sieb und einen hin und her schüttelnden Siebkasten. Die Reinigung der Körner von Nichtkornbestandteilen erfolgt mittels eines oder mehrerer Gebläse, die einen Luftstrom generieren, der die sich hin und her bewegenden Siebe mit hoher Geschwindigkeit und hohem Luftvolumen abrupt durchdringt, wobei die leichteren Teilchen durch den Luftstrom fortgetragen werden und das herausgeschüttelte Korn durch die Siebe hindurchfällt und in einen Korntank verbracht wird. Die Siebe sind in der Regel als verstellbare Lamellensiebe ausgebildet, die eine Anpassung an unterschiedliche Fruchtarten ermöglichen. Diese Lamellensiebe besitzen eine Vielzahl nebeneinander angeordneter verschwenkbarer Lamellen, durch deren Schwenkbewegung die durchlässige Fläche des Siebes vergrößert oder verkleinert werden kann. Die Verstellung der Lamellen erfolgt über eine Verstelleinrichtung.

Eine Variante der nach dem Stand der Technik verwendeten Lamellen ist an ihren oberen Sekanten in Querrichtung des Siebens wellenförmig gewölbt und besitzt an dem unteren Ende Aussparungen, um vorhandenen, nach unten ragenden Fingern, Platz beim Verschließen der Lamellen zu bieten. Diese unteren Aussparungen durchbrechen den Windumleiter erheblich.

Durch einen manuell oder motorisch betätigten Verstellantrieb lässt sich die Öffnung, d.h. die Durchlassfläche des Siebes sowie die Schüttelintensität des Anstellwinkels auf einen optimalen Wert einstellen, um möglichst viel Korn aber wenige bis keine Verunreinigungen durch das Obersieb hindurchtreten zu lassen. Eine wesentliche Bedeutung bei der Luftführung durch das Sieb kommt der Lamellengestaltung zu, weil deren Lage und Form die Luftströmung durch das Sieb beeinflussen. So haben die Lamellenform, der Abstand von Lamelle zu Lamelle und auch der Anstellwinkel der Lamellen einen entscheidenden Einfluss auf das Auseinanderschütteln des Erntegemisches entlang der Längsachse.

Verschwenkbare Lamellen werden beispielsweise in der DE 198 24 462 A1 erwähnt. Die Lamellen besitzen neben einem geschlossenen Windfang einen oberen Bereich mit relativ kurzen fingerartigen Lamellenspitzen.

Die EP 1 782 677 A1 beschreibt ein Sieb für Mähdrescher mit einem Rahmen, in dem mehrere gleichartige, sich quer zu einer Längs- und Schwingrichtung erstreckenden Lamellen, die in Längsrichtung des Siebes hintereinander angeordnet sind und um sich quer zur Längsachse des Siebes erstreckende Drehachsen drehbar in dem Rahmen gelagert sind und mit Verstellelementen versehen sind, die eine wählbare Einstellung des Winkels der Lamellen zum Rahmen ermöglichen. Jede Lamelle besitzt eine im Querschnitt abgewinkelte Form mit einem Verbindungsbereich. Der obere und der untere Teil der Lamellen besitzen jeweils eine lineare Abschlusskante. Die Lamellen weisen ferner nach oben gerichtete konvexe Rippen auf.

Eine weitere Siebvariante wird in der DE 20 2007 015 837 U1 beschrieben. Um die Aufgabe zu lösen, ein Lamellensieb zum Mähdrusch von Mais zur Verfügung zu stellen, das zum einen für das Abtrennen von unterschiedlichen Pflanzenteilen in unterschiedliche Fraktionen einsetzbar ist und das zum anderen so ausgestaltet ist, dass der über das Sieb geleitete Luftstrom so abgelenkt wird, dass die Effizienz des Siebes erhöht werden kann, wird vorgeschlagen, dass im Sieb Lamellen in unterschiedlichen Größen und abgewinkelt ausgestaltet sind, wobei die Lamellen in ihrer Größe so angelegt sind, dass sowohl Körnermais als auch Maiskörner mit einem Spindelanteil abtrennbar sind. Hierzu werden in einem Sieb in einem vorderen Teil Lamellen verwendet, die in einem Winkel von ca. 45° abgewinkelt sind. Der als Windfang dienende Bereich und der obere Bereich sind nahezu gleichlang ausgebildet, d.h. der Windfang besitzt eine Tiefe, die fast so groß ist wie der obere Bereich. Im hinteren Bereich des Siebens sind hingegen Lamellen vorgesehen, deren oberer Teil deutlich länger als der Windfang ist. Dieser hintere Bereich soll dazu dienen, Maiskörner mit einem Spindelanteil abzutrennen. Als Lamellentiefe werden im vorderen Teil 20 mm bis 60 mm, vorzugsweise 25 mm bis 35 mm und im hinteren Teil Lamellentiefen von 30 mm bis 60 mm, vorzugsweise zwischen 50 mm und 60 mm gewählt. In einer Draufsicht betrachtet sind die Lamellen jeweils rechteckig.

Es ist Aufgabe der vorliegenden Erfindung, die Lamellenform im Hinblick auf eine bessere Luftführung und effektivere mechanische Stoßaktion zu optimieren. Diese Aufgabe wird durch das Sieb nach Anspruch 1 gelöst. Erfindungsgemäß besitzt die Lamelle folgende Merkmale:
a) Der Winkel (β), den das obere 111 und das untere Teil 112 der Lamelle einschließen, liegt zwischen 125° und 150°, vorzugsweise zwischen 130° und 140°.
b) Die obere Abschlusskante 114 besitzt mehrere im Abstand zueinander angeordnete Ausstülpungen 115 mit einer teilkreisförmigen Kante 116, deren Sekante 117 eine Länge I₁ zwischen 20 mm und 40 mm, vorzugsweise 25 mm bis 35 mm und deren maximale Höhe hi (in vertikaler Richtung zur Sekante gemessen) von 6 mm bis 12 mm besitzt.
c) Das obere Teil 111 hat eine ohne die Ausstülpungen 115 gemessene Gesamthöhe h₂ von 25 mm bis 45 mm, vorzugsweise 30 mm bis 35 mm.
d) Das untere Teil 112 hat eine Gesamthöhe h₃ von 16 mm bis 30 mm, vorzugsweise 18 mm bis 24 mm.
e) Die oberen Teile 111 aufeinanderfolgender Lamellen sind in eine gemeinsame Ebene verschwenkbar, wobei die Ausstülpungen 115 einer Lamelle zur unteren Knickkante 119 der danebenliegenden Lamelle 11 einen Abstand a von mindestens 1 mm, vorzugsweise einen Abstand von 2 mm bis 20 mm haben.
f) Die Lamellen 11 sind aus der unter e) beschriebenen Position um einen Winkel α bis zu 50°, vorzugsweise 45° bis 35° verschwenkbar.

Bei Einhaltung dieser Merkmale wird zwischen zwei Lamellen ein Windkanal erzeugt, der sich nach Art einer Venturi-Düse im oberen Bereich verjüngt, weil der Abstand der unteren Teile benachbarter Lamellen größer ist als der Abstand der als Stoß- und Windleitblech dienenden obere Bereiche. Das Maß der Verengung eines solchen Windkanals wird durch den Schwenkwinkel der Lamellen variiert, wobei zu kleineren Schwenkwinkeln hin der Abstand benachbarter Lamellen im oberen Bereich deutlich verringert wird. Im Gegensatz zu den beispielsweise, in der nach dem Stand der Technik verwendeten jeweils fingerförmig langgestreckten Ausbuchtungen im oberen Bereich, sind die Ausstülpungen gemäß Merkmal b) und c) als breite gerundete Stoßkanten ausgebildet, die im Gegensatz zu den nach dem Stand der Technik bekannten Ausführungsformen breitflächig geschlossen sind. Hierdurch wird beim Öffnen der Lamellen am Ende des Windkanals ein Schütteltrichter gebildet, der in Serie hintereinander geschaltet fortlaufend das jeweilige, gesamte Erntegemisch wirksam zerstieben kann. Der als Windleitblech oder auch Winddeflektor schräg nach oben gebogene Bereich 111 dient als physisches Schüttelblech, das in Verbindung mit einer hin und her, auf und herab führenden Schüttelbewegung eines angetriebenen Mähdrescher-Siebkastens den Erntegutfluss in der Länge besonders schnell auseinander zieht. Diese mechanische Zug- und Reißbewegung erfolgt verstärkt durch den bereits erwähnten aerodynamischen Venturi-Effekte, wobei Körner und Samen getrennt werden. Zwischen zwei Lamellen bildet sich an der Austrittsstelle des Windes raus aus dem Schütteltrichter ein höherer Druck aus. Durch die in der Höhe relativ kurzen Ausstülpungen wird jedenfalls eine "gewellte obere Stoßkante" gebildet, die im Gegensatz zu den nach dem Stand der Technik verwendeten längeren und deutlich schmaleren Fingern über eine größere Distanz die hohe Strömungsgeschwindigkeit aufrechterhält. Bei geringer Verschwenkung der Lamellen um/ab ca. 5° aus der 0°-Lage, bei der der obere Bereich des Windkanals noch nahezu verschlossen ist, lässt sich die Luftströmung in der Geschwindigkeit präzise variieren, wobei in Abhängigkeit der vorliegenden Korngrößen zum Beispiel Bruch- und Kümmerkörner verbessert mechanisch getrennt und aerodynamisch über die Lamellenoberflächen 111 hinausgefegt werden können. Die Geschwindigkeit des durchströmenden Windes wird in erster Linie über die Drehgeschwindigkeit des Gebläses eingestellt, in zweiter Linie durch die Lamellenform, dem Lamellenabstand und dem Lamellenanstellwinkel. Je stärker die Lamellen geschlossen sind, das heißt je geringer der Lamellenanstellwinkel ist, desto höher sind der Austrittsdruck und die Austrittswindgeschwindigkeit und desto geringer ist die herausströmende Windmenge.

Runde Bögen der Ausstülpungen 115 unterbrechen einerseits den ansonsten nur laminierten Windaustritt sowie das Aufeinanderstoßen des ansonsten plauen Gutflusses, um den Grad an Zerstriebung im Schütteltrichter ganzflächig auf einem besonders hohen Niveau daueraktiv zu halten. Der dauernd zerstiebene Gutfluss wird von unten kapillar dauernd offen gehalten, um den Wind ununterbrochen dauernd durchschießen zu lassen. Hierzu wird der horizontal einschließende Wind an dem Windfang 112 laufend vertikal nach oben aktiv umgeleitet. Weiterbildungen der Erfindung sind in den Unteransprüchen beschrieben. So sind die im oben genannten Merkmal b) genannten Ausstülpungen 115, an ein- und derselben Lamelle seitlich in einem Abstand b) von 4 mm bis 16 mm vorzugsweise 8 mm bis 10 mm zur jeweils nächsten Ausstülpung angeordnet. Dieses Abstandsmaß korreliert mit nach einer weiteren Ausgestaltung der Erfindung vorgesehenen Anordnung von gekrümmt ausgebildeten Fingern, die sich weg von der Lamellenunterseite nach unten erstrecken. Die Ausstülpungen besitzen vorzugsweise eine einheitliche Form, was jedoch nicht ausschließt, dass die Formgestaltung nach der vorliegenden Erfindung auch ungleich von Ausstülpung zu Ausstülpung sein kann. Insbesondere bei gleichgeformten Lamellen wird ein Radius der teilkreisgeformten Sekante zwischen 13 mm und 15 mm gewählt. Die Ausstülpungen können auch mit kleinstmöglichem Abstand ggf. unmittelbar aneinandergrenzend, aufeinanderfolgen und sogar eine sinusartige Form - allerdings unter Einhaltung der in den Ansprüchen angegebenen Maßen - angeordnet sein. Auch die Unterkante ist im Wesentlichen linear, kann jedoch auch geringfügig gewellt sein.

Die Drehachsen der Lamelle werden bevorzugt im oberen Teil angeordnet, insbesondere in einem Abstand von 8 mm bis 12 mm von der Knickkante entfernt. Durch diese Maßnahme wird vermieden, dass sich im Bereich der Knickkante auf der Lamellenunterseite Verwirbelungen bilden. Der Abstand nebeneinanderliegender Lamellen, gemessen zwischen zwei Drehachsen (oder zwischen benachbarten Windfang-Unterteilen) liegt zwischen 33 mm und 63 mm, vorzugsweise bei 38 mm. Die Knickkante wird dadurch auch freigehalten sämtliche abstürzenden und abrutschenden Körner zügig über diese Kante herunterfallen zu lassen.

Insbesondere für ein Obersieb werden Lamellen mit nach unten gerichteten gebogenen Fingern verwendet, deren Länge vorzugsweise 15 mm bis 22 mm und/oder deren Breite 5 mm bis 10 mm beträgt. Vorzugsweise besitzen diese Finger eine im Querschnitt gewölbte konkave Form. Die Fingerbreite wird so gewählt, dass die Finger eines Siebes über die Gesamtbreite gemessen den durch den als Windfang dienenden Teil und den oberen Bereich als Stoß- und Windblech gebildeten Windkanal um 10 % bis 30 %, vorzugsweise 20 % reduzieren.

Dieses Sieb wird bevorzugt als Obersieb verwendet, das mit einer Frequenz von 180 bis 220 wiederkehrenden Bewegungen pro Minute, ausgehend von einer Ausgangslage um einen Weg (s) nach vorne, gleichzeitig eine vergleichbare Wegstrecke nach unten und abschließend zurück in die Ausgangslage bewegt wird. Der Weg (s) beträgt vorzugsweise 17 mm. Diese Bewegung des Obersiebes bewirkt ein hin und her schütteln und gleichzeitig ein auf- und abschütteln. Wenn das Sieb mit den nach unten ragenden Fingern abrupt nach hinten bewegt wird, werden die zuvor bei dem nach unten laufenden Schüttelvorgang eingekippten Volumenanteile des Erntegutstroms abrupt angestoßen und in Verbindung mit den Ausstülpungen des Stoß- und Windleitbleches in dem Windkanal auseinandergezogen (zerstieben), wobei durch diese fortwährende Schüttelbewegung das Zerstieben laufend aufrechterhalten wird. Das stets nachkippende Erntegemisch wird unsanft, nämlich stoßartig auseinandergestoben, wenn der Siebkasten nach hinten aufwärts schüttelt. Die verwendeten Finger besitzen zudem eine aerodynamische Wirkung, in dem sie den Winddurchtritt verengen. Die konkave Wölbung der Finger (im Querschnitt) führt dazu, dass der durch das Gebläse erzeugte Wind an den Außenkanten der Finger beschleunigt vorbeistreicht und sich dahinter windjetartig weiterbewegt. Diese Venturi-Verwirbelung in Verbindung mit dem mechanischen Rundbogen-Stoß-Effekt potenziert das Zerstieben des Erntegutes.

Weitere Details der Erfindung werden im Folgenden anhand der Zeichnungen erläutert. Es zeigen:
- Fig. 1: eine schematische perspektivische Ansicht eines Siebes mit mehreren gestaffelt angeordneten Lamellen,
- Fig. 2: eine Teilansicht auf eine Lamelle,
- Fig. 3: eine Seitenansicht mehrerer benachbarter Lamellen mit in einer Ebene ausgerichteten hintereinander gesetzten Windleitblechen und
- Fig. 4: mehrere benachbarte Lamellen mit einer um ein Öffnungswinkel von etwa 45° verschwenkten Lamellenreihe.

Mähdrescher und deren Funktionsweise sind prinzipiell aus dem Stand der Technik bekannt und werden beispielsweise in der EP 1 068 792 B1 beschrieben. In dem dortigen Mähdrescher wird mittels einer Dreschtrommel und dem darunter angeordneten Dreschkorb das Erntegut in ein Gemisch getrennt, das seine Bestandteile Korn, Kurz-Stroh, Spindeln, Grannen und Spreu enthält. Das Stroh wird über die Schüttler oder mittels Abscheiderotoren oberhalb einer Reinigungseinrichtung weitergefördert, wobei die noch im Stroh befindlichen Körner abgeschieden werden und über einen Rücklaufboden zu der Reinigungseinrichtung gelangen. Das von der Drescheinrichtung unmittelbar abgeschiedene Korn und die Spreu fallen durch den Dreschkorb direkt auf einen Vorbereitungsboden oder auf Förderschnecken, wovon sie mittels einer Schwing- oder Drehbewegung zur Reinigungseinrichtung weitergefördert werden. In der Reinigungseinrichtung sind ein Gebläse und mindestens ein Sieb, meistens ein Ober- und ein Untersieb übereinander angeordnet. Mittels des Gebläses wird das Sieb bzw. werden das Ober- und das Untersieb von unten mit einem Luftstrom beaufschlagt. Das Unter- und das Obersieb selbst vollziehen während des Betriebs der Reinigungseinrichtung eine oft gegenläufige Schwingbewegung. Die Gebläsedrehzahl sowie die sogenannte Öffnungsweite der Siebe sind verstellbar, letztere durch Verschwenkung der Lamellen um ihre Drehachse.

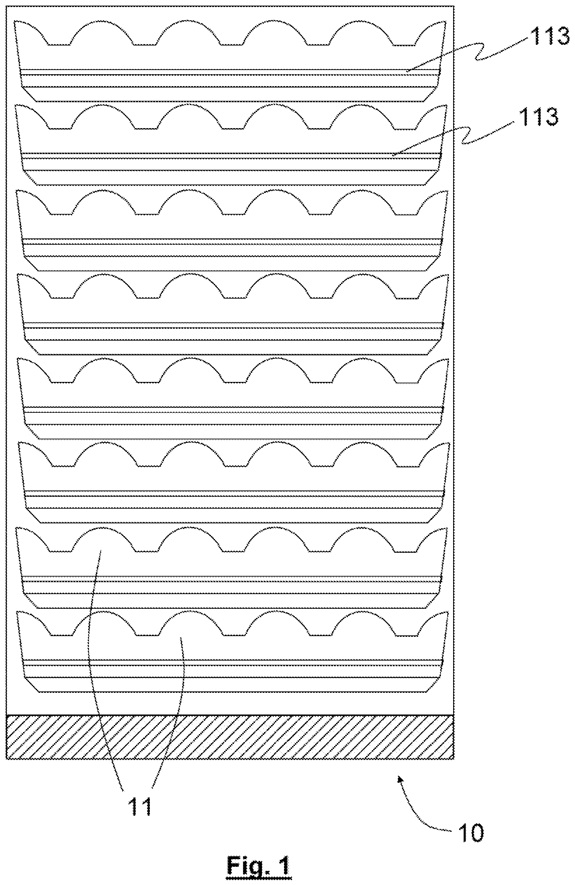

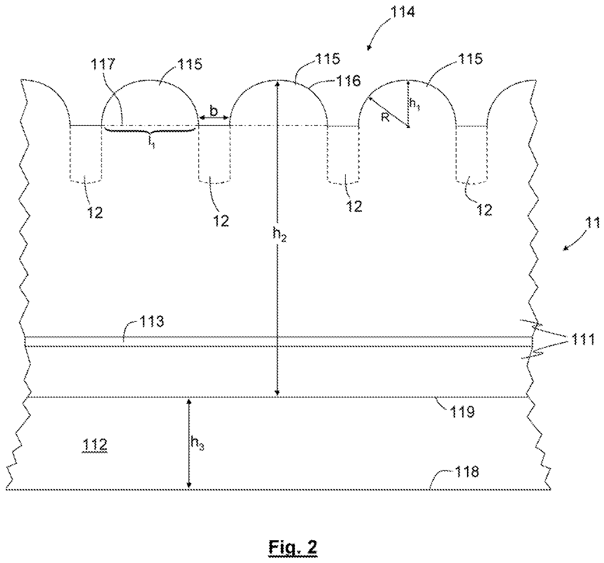

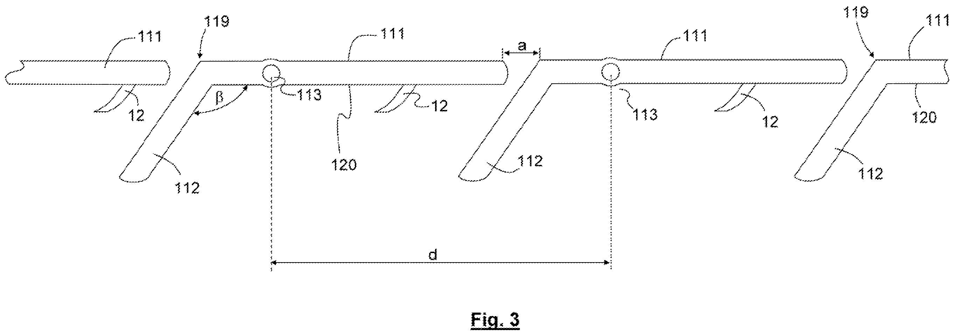

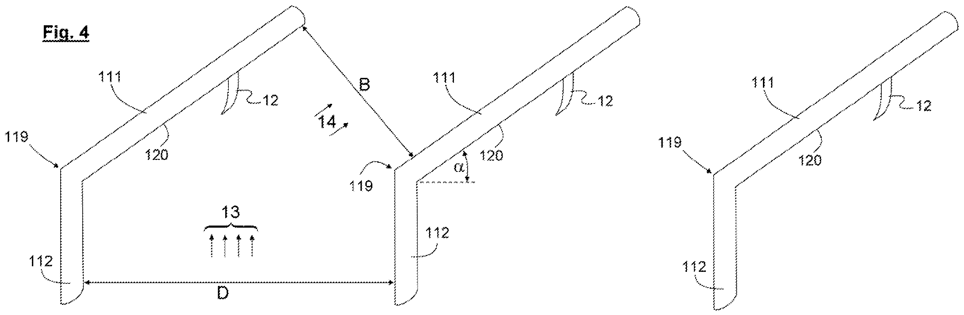

In Fig. 1 ist ein geöffnetes Lamellen Sieb 10 mit einem Rahmen dargestellt, in dem mehrere gleichartige, sich quer zu einer Längs- und Schwingrichtung des Siebens erstreckende Lamellen 11 hintereinander angeordnet sind. Die Lamellen erstrecken sich quer über die gesamte Fläche des Siebrahmens und sind von der in Fig. 3 dargestellten geschlossenen Lage in die beispielsweise in Fig. 4 dargestellte Lage verschwenkbar. Ein Ausführungsbeispiel einer Lamelle ist Fig. 2 zu entnehmen. Diese Lamelle besitzt einen unteren Teil 112 mit einer Höhe h₃, die zwischen 16 mm und 30 mm, vorzugsweise 20 mm bis 24 mm (gemessen von der Unterkante 118 bis zur Knickkante 119) liegt. Die neue erfindungsgemäße Lamelle besitzt insbesondere statt der nach dem Stand der Technik verwendeten Finger Ausstülpungen, die mindestens zweimal so breit sind. Durch diese Formgestaltung einer breiten, flachradialen Rundung wird das zu bearbeitende voluminöse Erntegemisch massiver und erheblich schneller auseinander geschüttelt bzw. aggressiver bearbeitet, so dass es vorn auf dem Obersieb nicht mehr zu einer Überschüttung kommt, die dort den Wind raus aus den Lamellen ersticken würde.

Hieran schließt sich ein oberer Bereich 111, der als Stoß-, Absiebe- und Windleitblech dient, an, der zu dem als Windfang dienenden unteren Teil 112 abgewinkelt ist. Der eingeschlossene Winkel β (siehe Fig. 3) beträgt 125° bis 150°, vorzugsweise 130° bis 140°. Die obere Abschlusskante 114 weist nebeneinander liegende Ausstülpungen 115 auf, die im Abstand zueinander angeordnet sind und einen Radius R aufweisen, der zwischen 6 mm und 12 mm liegt. Der Abstand b zweier nebeneinanderliegender Ausstülpungen 115 beträgt 4 mm bis 16 mm, vorzugsweise 8 mm bis 10 mm. Bei den Ausstülpungen kann es sich um halbkreisförmige Ausstülpungen handeln, so dass die in Fig. 2 dargestellte Sekante 117 eine Länge I₁=2R besitzt. Es können jedoch auch solche Ausstülpungen verwendet werden, bei denen der Radius R größer als die mit hi bezeichnete Tiefe der Ausstülpungen 115 ist. Beispielsweise kann die Tiefe hi der Ausstülpungen 115 nur das 0,2-fache der Sekantenlänge l₁ betragen. Die Kante 116 ist vorzugsweise breit, flachrund (konvex) rund ausgebildet und weicht damit entscheidend von den schmalen kurz- oder langfingerartigen Ausstülpungen nach dem Stand der Technik deutlich ab.

Die Lamelle ist um eine mit 113 bezeichnete Drehachse schwenkbar. Diese Drehachse liegt vorzugsweise in einem Abstand c von 8 mm bis 10 mm von der Knickkante 119 entfernt. Die Höhe h₂ des oberen Bereiches 111 (ohne die Höhe hi) der Ausstülpungen 115 beträgt 25 mm bis 45 mm, vorzugsweise 30 mm bis 35 mm.

Fig. 3 zeigt nebeneinanderliegende Lamellen in einer Stellung, in der der Luftkanal bis auf einen kleinen Abstandspalt a von 2 mm bis 20 mm verschlossen ist. Der Abstand d zweier Drehachsen 113 liegt zwischen 33 mm und 63 mm, vorzugsweise bei 38 mm. Dies ist auch der Abstand, den die Unterkanten 118 benachbarter Lamellen voneinander haben.

Fig. 4 zeigt ein um das Winkelmaß α von bis zu 50° verschwenkte Lamellenanordnung. Im praktischen Betrieb reichen Schwenkwinkel von bis zu 30°-35° in den meisten Fällen aus. Der Abstand zweier benachbarter Lamellen im Bereich der unteren Kanten 118, der mit D gekennzeichnet ist, liegt bei 38 mm. Der durch die Pfeile 13 angedeutete Luftstrom wird in Richtung des Pfeiles 14 umgelenkt und in einen Windkanal mit der Breite B gelenkt, die deutlich enger als der Einfluß D ist, weshalb sich der bereits beschriebene Venturi-Effekt ergibt. Finger 12 erstrecken sich von der Unterseite 120 des oberen Bereichs 111 der Lamelle nach unten. Diese Finger 12 besitzen eine Breite von beispielsweise 6 mm, die dem Maß b (siehe Fig. 2) entspricht, nämlich dem Abstandsmaß b zwischen zwei Ausstülpungen 115. Diese Finger sind leicht gekrümmt und im Querschnitt konkav gewölbt, wobei die konkave Seite dem unteren Teil 112 der Lamelle zugewandt ist. Diese Finger 12 wie auch die gesamte Lamellenform 11 wirken auf den durch ein nicht dargestelltes Gebläse erzeugten Luftstrom aktiv, sobald das Sieb Schwenkbewegungen ausübt. Eine Schwenkbewegung eines Obersiebes ist beispielsweise 17 mm nach vorne gerichtet, und gleichzeitig 17 mm nach unten, und aus dieser Tiefenlage wieder zurück in die Ausgangslage, so dass ein etwa dreieckförmiger oder ovaler Kreislauf beschrieben wird. Diese Bewegung wird ca. 200 mal pro Minute durchgeführt und bewirkt nach Abkippen des Gutflusses über die Endkante 114 das Zerstieben und in Verbindung mit dem durchschießenden Wind das Reinigen und Absieben der Samen und Kornbestandteile aus dem gedroschenen Erntegemisch, welche einerseits durch die Luftkanalverjüngung vom Maß D zum Maß B beschleunigt und zusätzlich durch die Finger 12 stoßweise seitlich gedrückt und bei der Aufwärtsbewegung gezogen wird. Neben dieser Stoßwirkung der Finger 12 wirken auch die Ausstülpungen 115 als Rundbögen als Stoßkanten für das Erntegemisch.

## Patentansprüche

1. Sieb für eine Reinigungsvorrichtung eines Mähdreschers mit einem Rahmen (10), in dem mehrere gleichartige, sich quer zu einer Längs- und Schwingrichtung des Siebes erstreckende Lamellen (11) - in der Längsrichtung des Siebes betrachtet - hintereinander angeordnet sind und um sich quer zur Längsachse des Siebes erstreckende Drehachsen (113) in jeweils zumindest im wesentlichen gleichen Abständen drehbar in dem Rahmen gelagert und mit Verstellelementen versehen sind, die eine wählbare Einstellung des Winkels (a) der Lamellen zum Rahmen ermöglichen, wobei jede Lamelle (11) eine im Querschnitt abgewinkelte Form mit einer Knickkante (119) und mit einem unteren, eine linear verlaufende untere Abschlusskante (118) besitzenden als breitflächig geschlossener, effektiver Windfang dienenden Teil (112) und einem in Fortsetzung kommenden Stoß- und Windleitblech oberen Bereich (111), der eine nicht lineare obere Abschlusskante (114) besitzt aufweist,
**gekennzeichnet durch**
folgende Merkmale:
a) Der Winkel (β), den das obere (111) und das untere Teil (112) der Lamelle einschließen, liegt zwischen 125° und 150°, vorzugsweise zwischen 130° und 140°,
b) Die obere Abschlusskante (114) besitzt mehrere im Abstand zueinander angeordnete Ausstülpungen (115) mit einer teilkreisförmigen Kante (116), deren Sekante (117) eine Länge (l₁) zwischen 20 mm und 40 mm, vorzugsweise 25 mm bis 35 mm und deren maximale Höhe (h₁) (in vertikaler Richtung zur Sekante gemessen) von 6 mm bis 12 mm besitzt,
c) Das obere Teil (111) hat eine ohne die Ausstülpungen (115) gemessene Gesamthöhe (h₂) von 25 mm bis 45 mm, vorzugsweise 30 mm bis 35 mm,
d) Das untere Teil (112) hat eine Gesamthöhe (h₃) von 16 mm bis 30 mm, vorzugsweise 18 mm bis 24 mm,
e) Die oberen Teile (111) aufeinanderfolgender Lamellen sind in eine gemeinsame Ebene verschwenkbar, wobei die Ausstülpungen (115) einer Lamelle zur unteren Knickkante (119) der danebenliegenden Lamelle (11) einen Abstand (a) von mindestens 1 mm, vorzugsweise einen Abstand von 2 mm bis 20 mm haben,
f) Die Lamellen (11) sind aus der unter e) beschriebenen Position um einen Winkel (a) bis zu 50°, vorzugsweise 45° bis 35° verschwenkbar.

2. Sieb nach Anspruch 1, **dadurch gekennzeichnet, dass** die Ausstülpungen (115) nach Merkmal b) einen Abstand (b) von 4 mm bis 16 mm, vorzugsweise 8 mm bis 10 mm zueinander haben.

3. Sieb nach Anspruch 1 oder 2, **dadurch gekennzeichnet, dass** die Ausstülpungen (115) einer Lamelle eine gleiche Form aufweisen.

4. Sieb nach einem der Ansprüche 1 bis 3, **dadurch gekennzeichnet, dass** der Radius (R) der teilkreisförmigen Kante (116) der Ausstülpungen (115) zwischen 6 mm und 15 mm liegt.

5. Sieb nach einem der Ansprüche 1 bis 4, **dadurch gekennzeichnet, dass** die Drehachsen (113) der Lamellen im oberen Teil (111) angeordnet ist, vorzugsweise in einem Abstand (c) von 8 mm bis 12 mm von der Knickkante (119) entfernt.

6. Sieb nach einem der Ansprüche 1 bis 5, **dadurch gekennzeichnet, dass** der Abstand (d) nebeneinanderliegender Lamellen gemessen zwischen zwei Drehachsen (113) benachbarter Lamellen zwischen 33 mm und 63 mm, vorzugsweise bei mindestens 38 mm liegt.

7. Sieb nach einem der Ansprüche 1 bis 6, **dadurch gekennzeichnet, dass** sich zwischen benachbarten Ausstülpungen (115) jeweils gekrümmt ausgebildete Finger (12) weg von der Lamellenunterseite (120) nach unten erstrecken.

8. Sieb nach Anspruch 7, **dadurch gekennzeichnet, dass** die Länge der Finger (12) 15 mm bis 22 mm beträgt und/oder die Finger eine Breite von 5 mm bis 10 mm und/oder eine im Querschnitt in Richtung der nachfolgenden Lamelle gewölbte konkave Form besitzen.

9. Sieb nach einem der Ansprüche 7 oder 8, **dadurch gekennzeichnet, dass** die Finger (12) eines Siebes (10) über die Gesamtbreite gemessen den durch den als Windfang dienenden Teil (112) und den oberen Bereich (111) als Stoß- und Windleitblech gebildeten Windkanal um 10 % bis 30 %, vorzugsweise 15 % bis 20 % reduzieren.

10. Verwendung des Siebens nach einem der Ansprüche 1 bis 9 als Obersieb, Untersieb, Vorsieb oder Siebverlängerung, das mit einer Frequenz von 180 bis 220 wiederkehrenden Bewegungen pro Minute, ausgehend von einer Ausgangslage um einen Weg (s) nach vorn, gleichzeitig denselben Weg (s) nach unten und abschließend zurück in die Ausgangslage bewegt wird, wobei der Weg (s) vorzugsweise 17 mm beträgt.

## Claims

1. Sieve for a cleaning device of a combine harvester with a frame (10), in which several similar lamellae (11), extending transversely to a longitudinal and swinging direction of the screen - in the view in the longitudinal direction of the screen - are arranged one behind the other and are rotatably mounted in the frame at at least substantially equal distances about axes of rotation (113) extending transversely to the longitudinal axis of the screen and are provided with adjustment elements which allow a selectable setting of the angle (a) of the lamellae (11) to the frame, each lamellae (11) having an angled shape in cross section with a fold edge (119) and with a lower part (112) having a linearly running lower end edge (118) serving as a broadly closed, effective windbreak and a in continuation coming impact and wind deflector upper area (111), which has a non-linear upper edge (114),
**characterized by**
the following features:
a) The angle (β), formed by the upper (111) and the lower part (112) of the lamella is between 125° and 150°, preferably between 130° and 140°.
b) The upper closing edge (114) has several spaced-apart protuberances (115) with a part-circular edge (116) whose secant (117) has a length (l₁) between 20 mm and 40 mm, preferably 25 mm up to 35 mm and its maximum height (h₁) (measured in the vertical direction to the secant) from 6 mm to 12 mm.
c) The upper part (111) without the protuberances (115) has a measured overall height (h₂) of 25 mm to 45 mm, preferably 30 mm to 35 mm.
d) The lower part (112) has an overall height (h₃) of 16 mm to 30 mm, preferably 18 mm to 24 mm.
e) The upper parts (111) of successive lamellae can be pivoted into a common plane, with the protuberances (115) of one lamellae having a distance (a) to the lower fold edge (119) of the adjacent lamellae of at least 1 mm, preferably have a distance of 2 mm to 20 mm.
f) The lamellae (11) can be pivoted from the position described under e) by an angle (a) of up to 50°, preferably 45° to 35°.

2. Sieve according to claim 1, **characterized in that** the protuberances (115) according to feature b) have a distance (b) of 4 mm to 16 mm, preferably 8 mm to 10 mm from one another.

3. Sieve according to claim 1 or 2, **characterized in that** the protuberances (115) of a lamella have the same shape.

4. Sieve according to one of claims 1 to 3, **characterized in that** the radius (R) of the part-circular edge (116) of the protuberances (115) is between 6 mm and 15 mm.

5. Sieve according to one of claims 1 to 4, **characterized in that** the axes of rotation (113) of the lamellae is arranged in the upper part (111), preferably at a distance (c) of 8 mm to 12 mm from the fold edge (119).

6. Screen according to one of Claims 1 to 5, **characterized in that** the distance (d) between adjacent lamellae, measured between two axes of rotation (113) of adjacent lamellae, is between 33 mm and 63 mm, preferably at least 38 mm.

7. Sieve according to one of Claims 1 to 6, **characterized in that** between adjacent protuberances (115) curved fingers (12) each extend downward away from the underside (120) of the lamellae.

8. Sieve according to claim 7, **characterized in that** the length of the fingers (12) is 15 mm to 22 mm and/or the fingers have a width of 5 mm to 10 mm and/or a cross-section in the direction of the following lamella having an arched concave shape.

9. Sieve according to one of Claims 7 or 8, **characterized in that** the fingers (12) of a sieve (10) measured over the entire width reduce the wind tunnel formed by the part (112) serving as a wind break and the upper region (111) as impact and wind deflector by 10 % to 30 %, preferably 15 % to 20 %.

10. Use of the sieve according to one of Claims 1 to 9 as a top sieve, bottom sieve, preliminary sieve or sieve extension which, starting from a starting position, moves forward one way (s) at a frequency of 180 to 220 recurring movements per minute, simultaneously moving the same way (s) is moved down and finally back to the starting position, the path (s) preferably being 17 mm.

## Revendications

1. Tamis pour un dispositif de nettoyage d'une moissonneuse-batteuse, comprenant un cadre (10) dans lequel plusieurs lamelles (11) similaires s'étendant transversalement à une direction longitudinale et oscillante du tamis sont disposées - vues dans la direction longitudinale du tamis - les unes derrière les autres et sont logées chacune à rotation dans le cadre autour des axes de rotation (113) s'étendant transversalement à l'axe longitudinal du tamis, respectivement à des distances au moins pour l'essentiel égales et sont pourvues d'éléments de réglage qui permettent un réglage sélectionnable de l'angle (a) des lamelles par rapport au cadre, dans lequel chaque lamelle (11) présente, en section transversale, une forme coudée avec un bord plié (119) et avec une partie inférieure (112) présentant un bord terminal inférieur (118) s'étendant linéairement et faisant fonction de brise-vent efficace fermée sur une large surface, ainsi qu'une zone supérieure (111) qui vient à la suite et fait fonction de déflecteur d'impact et de vent et qui présente un bord terminal supérieur non linéaire (114),
**caractérisé par** les caractéristiques suivantes:
a) L'angle (β) formé par la partie supérieure (111) et la partie inférieure (112) de la lame est compris entre 125° et 150°, de préférence entre 130° et 140°,
b) Le bord terminal supérieur (114) présente plusieurs protubérances (115) qui sont espacées les unes des autres et présentent un bord (116) en forme de cercle partiel, dont la sécante (117) présente une longueur (l₁) comprise entre 20 mm et 40 mm, de préférence entre 25 mm et 35 mm, et dont la hauteur maximale (h₁) (mesurée dans la direction verticale à la sécante) est comprise entre 6 mm et 12 mm,
c) La partie supérieure (111) présente une hauteur totale (h₂), mesurée sans les protubérances (115), qui est comprise entre 25 mm et 45 mm, de préférence entre 30 mm et 35 mm,
d) La partie inférieure (112) présente une hauteur totale (h₃) comprise entre 16 mm et 30 mm, de préférence entre 18 mm et 24 mm,
e) Les parties supérieures (111) de lamelles successives peuvent pivoter dans un plan commun, les protubérances (115) d'une lamelle présentant une distance (a) d'au moins 1 mm, de préférence une distance comprise entre 2 mm et 20 mm, par rapport au bord plié inférieur (119) de la lamelle située à côté,
f) Les lamelles (11) peuvent pivoter depuis la position décrite sous e) d'un angle (a) allant jusqu'à 50°, de préférence de 45° à 35°.

2. Tamis selon la revendication 1, **caractérisé par le fait que** les protubérances (115) selon la caractéristique b) présentent une distance (b) comprise entre 4 mm et 16 mm, de préférence entre 8 mm et 10 mm, les unes par rapport aux autres.

3. Tamis selon la revendication 1 ou 2, **caractérisé par le fait que** les protubérances (115) d'une lamelle présentent une même forme.

4. Tamis selon l'une quelconque des revendications 1 à 3, **caractérisé par le fait que** le rayon (R) du bord en forme de cercle partiel (116) des protubérances (115) est compris entre 6 mm et 15 mm.

5. Tamis selon l'une quelconque des revendications 1 à 4, **caractérisé par le fait que** les axes de rotation (113) des lamelles sont disposés dans la partie supérieure (111), de préférence à une distance (c) comprise entre 8 mm et 12 mm du bord plié (119).

6. Tamis selon l'une quelconque des revendications 1 à 5, **caractérisé par le fait que** la distance (d) de lamelles situées les unes à côté des autres, mesurée entre deux axes de rotation (113) de lamelles adjacentes, est comprise entre 33 mm et 63 mm, de préférence est d'au moins 38 mm.

7. Tamis selon l'une quelconque des revendications 1 à 6, **caractérisé par le fait que**, entre des protubérances (115) adjacentes, des doigts (12) conçus chacun de manière recourbée s'étendent vers le bas dans la direction opposée à la face inférieure de lamelle (120)

8. Tamis selon la revendication 7, **caractérisé par le fait que** la longueur des doigts (12) est comprise entre 15 mm et 22 mm et/ou que les doigts présentent une largeur comprise entre 5 mm et 10 mm et/ou une forme concave qui est bombée, en section transversale, dans le sens de la lamelle suivante.

9. Tamis selon l'une quelconque des revendications 7 ou 8, **caractérisé par le fait que** les doigts (12) d'un tamis (10), mesurés sur la largeur totale, réduisent de 10 % à 30 %, de préférence de 15 % à 20 %, le tunnel aérodynamique formé par la partie (112) servant de brise-vent et la zone supérieure (111) servant de déflecteur d'impact et de vent.

10. Utilisation du tamis selon l'une quelconque des revendications 1 à 9, en tant que tamis supérieur, tamis inférieur, tamis préliminaire ou extension de tamis qui, à partir d'une position de départ et à une fréquence de 180 à 220 mouvements récurrents par minute, est déplacé d'une distance (s) en avant, en même temps de la même distance (s) vers le bas et enfin de retour à la position de départ, dans lequel ladite distance (s) est de préférence de 17 mm.
